# EUROPEAN PATENT SPECIFICATION

(11) **EP 4 534 906 B1**
(45) Date of publication and mention of the grant of the patent: **28.10.2026**
(21) Application number: 24201993.3
(22) Date of filing: 23.09.2024
(51) Int. Cl.: F23N 5/08, F23R 3/28

(54) **LIGHT-OFF DETECTOR (LOD) INSTRUMENTATION TRANSLATOR FOR USE WITH LOD ASSOCIATED WITH AN AFTERBURNER OF A GAS TURBINE ENGINE**
FLAMMSENSOR-AUSWERTEEINHEIT ZUR VERWENDUNG MIT EINEM FLAMMSENSOR EINES NACHBRENNERS EINES GASTURBINENMOTORS
TRADUCTEUR D'INSTRUMENTATION POUR DÉTECTEUR D'EXTINCTION D'UNE FLAMME À UTILISER AVEC UN DÉTECTEUR D'EXTINCTION D'UNE FLAMME ASSOCIÉ À UNE POSTCOMBUSTION D'UN MOTEUR À TURBINE À GAZ

(30) Priority: 03.10.2023 US 202318480032
(43) Date of publication of application: 09.04.2025
(73) Proprietor: General Electric Company, Evendale, Ohio 45215 (US)
(72) Inventor: KNOBLOCH, Aaron Jay, Niskayuna, 12309 (US); ANDARAWIS, Emad Andarawis, Niskayuna, 12309 (US)
(74) Representative: Openshaw & Co.

(56) References cited:
- WO-A1-91/15715
- US-A- 4 823 114
- US-A- 5 164 600
- US-A1- 2021 255 283

## Description

### FIELD

The present disclosure relates to light-off detectors used in gas turbine engines.

### BACKGROUND

A gas turbine engine generally includes a turbomachine and can include an afterburner useful to combust fuel to provide additional thrust beyond that generated from operation of the turbomachine. Detecting when an afterburner is operating can be important to ensure proper engine operation. Sensors known as light-off detectors can be used to sense the presence of a flame through any variety of methods, including the detection of ultraviolet radiation present during an afterburning combustion event. Light-off detectors are often integrated with an engine controller, where power can be provided from the engine controller and light-off detector (LOD) data returned to the engine controller for evaluation. Maintenance and equipment upgrades can create challenges with respect to light-off detectors. Improvements to the integration of light-off detectors with gas turbine engines would be useful in the art.

US5164600A provides a prior art disclosure of a light off detecting arrangement for sensing the presence of a flame in a region such as the afterburner of a turbine engine is disclosed. An optical focusing device such as a lens or mirror is located near a quartz window adjacent the afterburner for concentrating electromagnetic radiation emanating from the region. An optical (fiber optic) pathway receives the concentrated electromagnetic radiation from the optical focusing device and conveys that radiation thru the optic filters to an opto-electrical converter for converting incident electromagnetic radiation to electrical signals. A frequency selective optical device such as an infrared filter is interposed between the optical focusing device and the opto-electrical converter for insuring that a preselected portion only of the electromagnetic radiation emanating from the region is converted to electrical signals. The electrical signals are compared to a predetermined threshold value and a fault flame present indication is issued if the comparison indicates sufficient radiation in the preselected portion indicative of the presence of a flame, and a second no flame indication is issued otherwise. US4823114A provides a prior art disclosure of a flame scanning system for monitoring a combustion process by detecting flame emission characteristics in the ultraviolet light spectrum. A metered relative flame intensity signal, flame-off signal, and flame-on signal are provided. A self-diagnostic feature produces a flame marginal signal indicative of substandard flame operation; a tube marginal signal indicative of imminent UV tube failure is also produced. A scanner shutter mechanism includes a check failure feature for detecting UV tube failure. An electronic assisted sighting indicator is also included to assist during on-sight scanner positioning and to provide optimum scanner placement. WO91/15715A1 provides a prior art disclosure of monitoring of a burner-generated flame in a flame zone achieved by watching for changes in amplitude of radiation leaving the flame zone using an opto-electric transducer and a processing circuit which is tuned to a flicker frequency pass band targeted on the looked-for flame.

### BRIEF DESCRIPTION OF THE DRAWINGS

A full and enabling disclosure of the presently described technology, including the best mode thereof, directed to one of ordinary skill in the art, is set forth in the specification, which makes reference to the appended figures, in which:
FIG. 1 is a cross-sectional view of a gas turbine engine in accordance with an exemplary aspect of the present disclosure.
FIG. 2 is a depiction of a prior art light-off detector integrated with an engine controller.
FIG. 3 is a schematic of a light-off detector integrated with an engine controller using another embodiment of a LOD instrumentation translator.
FIG. 5 is a schematic of a computing device.
FIG. 6 is a depiction of a method of operating an LOD instrumentation translator with a LOD and an engine controller.

### DETAILED DESCRIPTION

The invention provides a light-off detector (LOD) instrumentation translator according to claim 1. Embodiments are defined in the dependent claims. Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

The term "at least one of" in the context of, e.g., "at least one of A, B, and C" refers to only A, only B, only C, or any combination of A, B, and C.

The term "turbomachine" refers to a machine including one or more compressors, a heat generating section (e.g., a combustion section), and one or more turbines that together generate a torque output.

The term "gas turbine engine" refers to an engine having a turbomachine as all or a portion of its power source. Example gas turbine engines include gas turbine engines, turboprop engines, turbojet engines, turboshaft engines, etc., as well as hybrid-electric versions of one or more of these engines.

The term "combustion section" refers to any heat addition system for a turbomachine. For example, the term combustion section may refer to a section including one or more of a deflagrative combustion assembly, a rotating detonation combustion assembly, a pulse detonation combustion assembly, or other appropriate heat addition assembly. In certain example embodiments, the combustion section may include an annular combustor, a can combustor, a cannular combustor, a trapped vortex combustor (TVC), or other appropriate combustion system, or combinations thereof.

The terms "axial" and "axially" refer to directions and orientations that extend substantially parallel to a reference axis. Moreover, the terms "radial" and "radially" refer to directions and orientations that extend substantially perpendicular to the reference axis. In addition, as used herein, the terms "circumferential" and "circumferentially" refer to directions and orientations that extend arcuately about the reference axis.

The terms "coupled," "fixed," "attached to," and the like refer to both direct coupling, fixing, or attaching, as well as indirect coupling, fixing, or attaching through one or more intermediate components or features, unless otherwise specified herein.

As used herein, the terms "first", "second", and "third" may be used interchangeably to distinguish one component from another and are not intended to signify location or importance of the individual components.

The present disclosure is generally related to systems and methods for facilitating detection of an afterburning condition of an afterburner assembly of a propulsion system. During an operating condition of the propulsion system, such as whether a flame is present indicating an active afterburner of the propulsion system, the afterburner assembly may be commanded to provide fuel to a fuel injector in the afterburner section, which increases thrust produced by operation of the propulsion system. The afterburner assembly can be provided in a number of different types of propulsion systems, including gas turbine engines of a turbojet or low bypass ration turbofan variety, or sometimes also in a turbine-based combined cycle engine, to set forth just a few non-limiting examples. Reference will be made below to a particular implementation of the afterburner assembly, but no limitation is hereby intended for any particular type of propulsion system in which the afterburner assembly is integrated. Afterburners are typically located downstream of a turbine section of a gas turbine engine and upstream of a variable area nozzle configured to maximize thrust for a given flight condition. Not all nozzles, however, need to have a variable area configuration; fixed area ratio nozzles are also possible. After the propulsion system has commanded, or has been commanded, to activate the afterburner, confirmation of afterburner activation is needed in some instance to help ensure proper operation of the engine and take mitigating action needed. One or more detectors can be used to confirm activation that the afterburner by detecting a presence of a flame, or light off, of the afterburner, which is indicative of an afterburning condition (e.g., detecting the presence of a flame indicates an active afterburning condition, the absence of a flame indicates an inactive afterburning condition). Typically, light off detectors (LOD) used to confirm operation of the afterburner take the form of Geiger Mueller sensors which detect ultraviolet radiation indicative of afterburner operation. LODs can communicate with a computing device, such as a propulsion system controller, that an afterburner condition is detected.

Further disclosed herein is an embodiment of a propulsion system having an afterburner assembly. The afterburner assembly includes an exhaust section and a fuel injector assembly. Further, the fuel injector assembly includes a plurality of fuel injection members and a flame stability device. The plurality of fuel injection members are operable to inject fuel in the exhaust section of the afterburner assembly. Moreover, the plurality of fuel injection members defines a cold zone and a hot zone. The cold zone is positioned to provide a noise insulation barrier to the hot zone, but not all afterburners need include a cold zone.

For example, in one embodiment, the plurality of fuel injection members may include a first set of fuel nozzles and a second set of fuel nozzles. The first set of fuel nozzles may be disposed in the cold zone and the second set of the fuel nozzle may be disposed in the hot zone. Further, the fuel injector assembly may be operable to control the first set of fuel nozzles relative to the second set of fuel nozzles. Additionally, the fuel injector assembly may include a flame stability device positioned downstream of the plurality of fuel injection members. The flame stability device may be configured to assist in maintaining continual combustion within the exhaust section. One or more LODs can be placed at a variety of locations throughout the propulsion system.

Aspects of the present disclosure further present a method of operating an afterburner assembly of a propulsion system. The method includes operating the afterburner assembly to start-up the afterburner assembly. The method further includes injecting fuel of a fuel injector assembly in an exhaust section of the afterburner assembly. For example, a plurality of fuel injection members of a fuel injector assembly is configured to inject fuel of the fuel injector assembly into the exhaust section of the afterburner assembly while operating the afterburner assembly to start-up the afterburner assembly. Also disclosed is a means of modifying a fuel injection rate of the fuel injectors. The method includes using one or more LODs to detect the presence of an afterburning condition of the propulsion system.

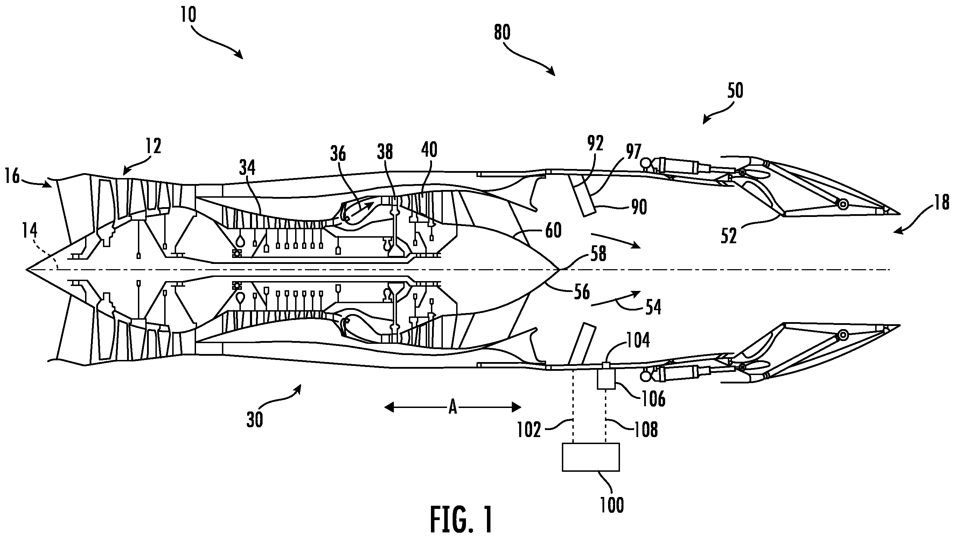

Referring now to the drawings, wherein identical numerals indicate the same elements throughout the figures, FIG. 1 is a schematic cross-sectional view of a propulsion system in accordance with an exemplary embodiment of the present disclosure. More particularly, for the embodiment of FIG. 1, the propulsion system is an afterburning gas turbine engine, referred to herein as a "gas turbine engine 10." The gas turbine engine 10 includes a fan assembly 12, a turbomachine 30 disposed downstream from the fan assembly 12, and an afterburner assembly 80 disposed downstream of the turbomachine 30. The gas turbine engine 10 has a generally longitudinally extending axis or centerline 14 extending from an inlet end 16 of the gas turbine engine 10 aftward to an exhaust end 18 of the gas turbine engine 10. Moreover, the turbomachine 30 defines an axial direction A (extending parallel to the engine centerline 14, provided for reference). Further, the gas turbine engine 10 defines a crosswise plane perpendicular to the axial direction A.

The exemplary turbomachine 30 includes a high pressure compressor 34, a combustor 36, a high pressure turbine 38, and a power turbine or a low pressure turbine 40, all arranged in a serial, axial flow relationship.

For the embodiment depicted, the afterburner assembly 80 includes an exhaust section 50 and a fuel injector assembly 90. The exhaust section 50 of the afterburner assembly 80 extends aftward from the turbomachine 30 and includes a nozzle portion 52. The nozzle portion 52 extends between the exhaust section 50 and the turbomachine 30 and defines a portion of an outer boundary of an engine exhaust flow path 54. The fuel injector assembly 90 includes a plurality of fuel injection members 92 and a flame stability device 97 positioned downstream of the plurality of fuel injection members 92. The plurality of fuel injection members 92 extends inwardly from the nozzle portion 52 and injects fuel in the exhaust section 50. Additionally, the flame stability device 97 extends inwardly from the nozzle portion 52 and is configured to assist in maintaining continual combustion within the exhaust section 50.

More specifically during operation, the nozzle portion 52 directs combustion gases discharged from the turbomachine 30 through exhaust section 50 of the afterburner assembly 80 wherein the fuel injected in the exhaust section 50 is mixed with and ignited by the combustion gases. The flame stability device 97 maintains the flame by producing a low speed eddy in the exhaust section 50. Such mixing and ignition produces additional thrust for the propulsion system.

A centerbody 56 extends aftward from turbomachine 30 to an apex 58 formed at an aft end 60 of the centerbody 56. More specifically, the centerbody 56 is concentrically aligned with respect to the exhaust section 50 and extends aftward along engine centerline 14. An outer surface of centerbody 56 defines an inner boundary of engine exhaust flow path 54.

During operation, airflow enters the gas turbine engine 10 through fan assembly 12. The air is compressed, and a portion of the air is discharged downstream at an increased pressure and temperature to the high pressure compressor 34. Fuel is introduced to the turbomachine 30 wherein the air and the fuel are mixed and ignited within the turbomachine 30 to generate hot combustion gases. Specifically, pressurized air from the high pressure compressor 34 is mixed with the fuel in the combustor 36 and ignited, generating combustion gases. Such combustion gases drive the high pressure turbine 38 which drives the high pressure compressor 34. The combustion gases are discharged from the high pressure turbine 38 into the low pressure turbine 40. The core airflow and combustion gases are then discharged from low pressure turbine 40 and directed towards the afterburner assembly 80.

The gas turbine engine 10 also includes an engine controller 100, such as, but not limited to, a Full Authority Digital Engine Controller, useful to control various aspects of operation of the gas turbine engine 10. For example, the engine controller 100 can be configured to modulate fuel delivered to the fuel injector assembly 90 via a control command 102. The control command 102 can be delivered to a fuel flow pump, fuel flow valve, or similar device useful in regulating the delivery of fuel to the fuel injector assembly 90. In one nonlimiting embodiment, the control command 102 can be a discrete control command useful to deliver a fixed rate of fuel to the fuel injector assembly 90. In other nonlimiting forms, the control command 102 can include a plurality of commands to different portions of the fuel injector assembly 90, such as those embodiments that include staged afterburner sections. In these embodiments, the engine controller 100 can issue a first control command 102 to a first stage of the fuel injector assembly 90, and thereafter issue a second control command 102 to a second stage of the fuel injector assembly 90. The timing between delivery of the first control command 102 and second control command can be variable or fixed, and can be dependent or independent from other actions. For example, the timing between stages can be a predetermined amount of time (e.g., one second or less between stages), or can be a function of pilot command (e.g., increasing power lever angle command from a throttle may dictate how many stages are operating in the afterburner). In one embodiment, the timing of activation of an afterburner stage may be dependent upon detecting that a predecessor stage has been activated.

The gas turbine engine 10 also includes a light-off detector 104 configured to monitor the presence of a flame, or light off, which is indicative of an afterburner condition, where an afterburner condition can include either the presence of an afterburning flame and/or the intensity of an afterburning flame. As mentioned above, the light-off detector (LOD) 104 can be used to detect ultraviolet (UV) radiation indicative of afterburner operation (but in some forms it may alternatively be constructed to detect infrared radiation). It is contemplated herein that the LOD detector can be used to detect UV radiation across a broad span of the UV spectrum, including detection of UV radiation from portions of short wave UV to medium and high wave portions of UV. To set forth just one non-limiting example, various embodiments of the LOD 104 can be constructed to sample UV wavelengths anywhere from 100 nanometers (nm) to 400nm. Some LODs 104 can be constructed to sample at specific wavelengths, while others can sample across a range of UV wavelengths. The LOD 104 can be placed at a variety of locations in the afterburner assembly 80 to detect a light off condition. In some embodiments of the gas turbine engine 10, more than one LOD 104 can be used to observe the afterburner condition. In still other additional and/or alternative embodiments, one LOD 104 can be positioned to detect an afterburner condition of a first stage of the afterburner assembly 80 of the gas turbine engine 10, while another LOD 104 can be positioned to detect an afterburner condition of a second stage of the afterburner assembly 80. In still further embodiments, one or more LODs 104 can be placed to observe a given stage of the afterburner assembly 80. In yet still further embodiments, the LOD 104 can be placed in a different location entirely, such as, but not limited to, the combustor 36. It will be appreciated that several different fuel injection members 92 and a flame stability device 97 can be distributed circumferentially around the afterburner assembly 80, and each of fuel injection members 92 and flame stability device 97 may have provisions for one or more afterburner stages. In such embodiments, one or more LODs 104 can be positioned at each location of the fuel injection members 92 and flame stability device 97, and in some forms, at each stage associated with each of the circumferential locations of the of fuel injection members 92 and a flame stability device 97.

The LOD 104 depicted in FIG. 1 is coupled with a light-off detector (LOD) instrumentation translator 106 which provides an interface between the LOD 104 and the engine controller 100. The LOD instrumentation translator 106 is configured to communicate with the engine controller 100 by delivering afterburner condition data 108 to the engine controller 100. The LOD instrumentation translator 106 is also configured to receive an excitation signal either from the engine controller 100 or any other suitable source. With respect to the LOD 104, the LOD instrumentation translator 106 is configured to receive light-off data from the LOD 104. The LOD instrumentation translator 106 can also be configured, in some embodiments, to communicate an LOD power to the LOD 104 and/or communicate an LOD power to any suitable device useful to interpret and/or operate upon a signal from the LOD 104, which power is generated as a result of the LOD instrumentation translator 106 receiving the excitation signal 112. Further details of the power and data communications between the LOD instrumentation translator 106 and both of the LOD 104 and the engine controller 100 is described further below.

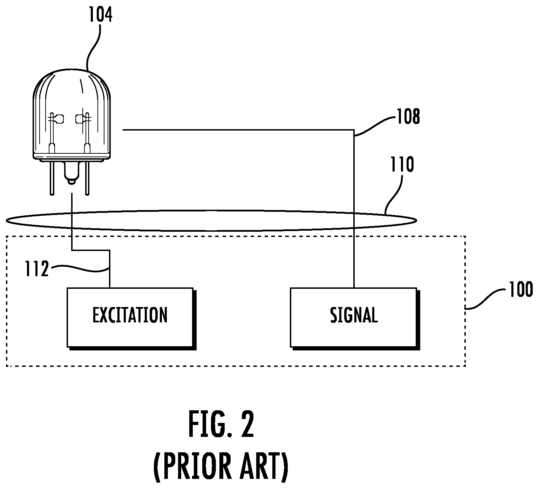

FIG. 2 depicts a prior art LOD 104 in the form of a Geiger Mueller sensor 104 that can be used without the LOD instrumentation translator 106 when coupled with the engine controller 100. It is, however, contemplated that the LOD instrumentation translator 106 can be used with any type of LOD 104, whether of the Geiger Mueller type of detector depicted in FIG. 2 or any other type. The Geiger Mueller LOD 104 can be coupled to the engine controller 100 through a wiring harness via a first interface 110, where both an excitation signal 112 is provided to the Geiger Mueller LOD 104 and the afterburner condition data 108 is returned to the engine controller 100. The LOD 104 can be connected through the first interface 110 in any number of manners. The first interface can include a wiring harness having one or more lead lines that allows passage of the excitation signal 112 from the engine controller 100 to the LOD 104 and/or conveys the afterburner condition data 108 to the engine controller 100 from the LOD 104. In some forms, lead lines can be used to connect the LOD 104 through a hardware enclosure of the engine controller 100, such as can be provided either by connecting directly to the LOD 104 or by connecting indirectly to the LOD 104 via a connector in which lead lines are used on either side of the connector to connect to both the LOD 104 and the engine controller 100. When the second interface 113 is in the form of a connector, such a connector can be a male/female connector. In this form, one half of a male/female connector can be affixed to a hardware enclosure for the engine controller 100, with the other half connected via lead lines to the LOD 104.

The dotted line depicted in FIG. 2 is labelled as the engine controller 100 which indicates that the engine controller 100 is capable of generating and sending the excitation signal 112 to the Geiger Mueller LOD 104, but, in some embodiments, another device may provide the excitation signal 112. In one implementation, the engine controller 100 is configured to provide an excitation signal having an input excitation of and an excitation frequency (e.g., an excitation on the order of a few kilohertz). In one form, the excitation signal can take the form of a clipped sinusoid, but other excitation signals are also contemplated herein. In the same implementation, the afterburner condition data 108 is returned from the Geiger Mueller LOD 104 in the form of rectangular pulses having a pulse amplitude and a frequency. The engine controller 100 is configured to receive the afterburner condition data 108 and interpret a status of the afterburner in light of the afterburner condition data 108. In one embodiment, afterburner condition data 108 having low pulse counts measured over a measuring window (e.g., how much 'on' time during a one second window) represents an afterburner condition that is in an OFF condition without a flame; high pulse counts measured over the measuring window represent an afterburner condition that is an ON condition having a flame. In some forms, a threshold pulse count over a measurement window represents a demarcation between the ON condition and the OFF condition. In some forms, a flame intensity can be measured by the relative number of pulse counts. For example, a high pulse count (e.g., a number of pulses over the measurement window, such as 2200 counts per second (cps)) represents a maximum flame intensity (e.g., a high fuel flow rate) while a low pulse count (e.g., a number of pulses over the measurement window, such as 600 cps) represents a minimum flame intensity. Thus, as will be appreciated, the engine controller 100 can be configured to determine a binary condition of the afterburner assembly 80 in some embodiments, but can alternatively be used to determine a relative condition of the afterburner assembly 80 in other embodiments. In some forms, the engine controller 100 may produce both a binary operating data of engine condition based on a number of pulses satisfying a threshold value determined over a measurement window (e.g., a binary operating data indicating either ON or OFF, where a threshold value can be, for example, 2500 pulses counted over a one second measurement window), while also producing an intensity operating data of engine condition based on a relative value of pulses measured over a measurement window of the afterburner condition data 108. A determination of either or both of the binary operating data and the intensity operating data can be provided by the engine controller 100 to any other subsystem that requires it, such as, but not limited to, a flight control system in which the propulsion system is used. The engine controller 100 can communicate provide the binary operating data and the intensity operating data over a data bus or any other suitable communication channel.

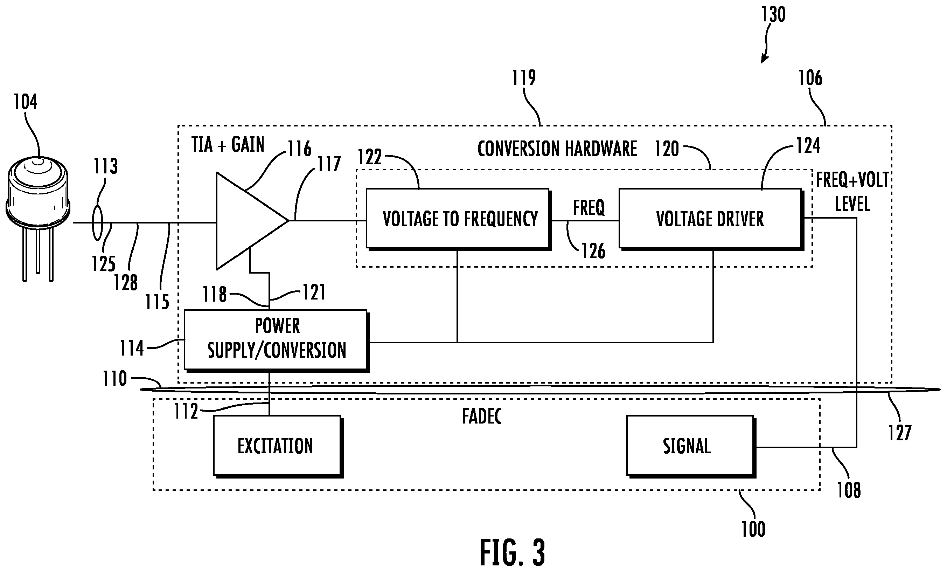

Turning now to FIG. 3, one embodiment of the LOD instrumentation translator 106 is illustrated, and is used to translate between a LOD 104 that is not operable with the excitation signal 112, and/or does not return afterburner condition data 108 having the same characteristics as those described above with the Geiger Mueller LOD 104. The LOD instrumentation translator 106 can be connected through a second interface 113 in any number of manners. In another form, the LOD 104 is wired directly with the LOD instrumentation translator 106 such that a rigid connection is provided (e.g., the LOD 104 is affixed directly to a hardware enclosure 119 for the LOD instrumentation translator 106). In some forms, lead lines 125 forming a wired interface 128 can be used to connect the LOD instrumentation translator 106 through the hardware enclosure 119 to the LOD 104, such as can be provided by connecting directly to the LOD 104 or can be connected indirectly to the LOD 104 via a connector in which lead lines are used on either side of the connector to connect to both the LOD 104 and the LOD instrumentation translator 106. The second interface 113, therefore, can include lead lines, such as would be found in a wiring harness having one or more cabling, that allows passage of the light-off data 115, and it can include a connector having one or more lead lines. The second interface 113 can be a male/female connector, one half of which can be affixed to a hardware enclosure for the LOD instrumentation translator 106. In other forms, however, the second interface 113 can be a male/female connector that includes lead lines to the LOD 104 on one side of the second interface 113, and includes lead lines to the LOD instrumentation translator 106 on another side of the second interface 113.

With respect to the first interface 110 in FIG. 3, the LOD instrumentation translator 106 can be connected through the first interface 110 in any number of manners. The first interface 110 can include a wiring harness having one or more lead lines that allows passage of the excitation signal 112 from the engine controller 100 to the LOD instrumentation translator 106 and/or conveys the afterburner condition data 108 to the engine controller 100 from the LOD instrumentation translator 106. In some forms, lead lines 125 can be used to connect the LOD instrumentation translator 106 through the hardware enclosure 119 to the engine controller 100, such as can be provided by connecting directly to the engine controller 100 or can be connected indirectly to the engine controller 100 via a connector in which lead lines are used on either side of the connector to connect to both the LOD instrumentation translator 106 and the engine controller 100. When the first interface 110 is in the form of a connector, such a connector can be a male/female connector. In this form, one half of a male/female connector can be affixed to a hardware enclosure for the engine controller 100, with the other half connected via lead lines to the LOD instrumentation translator 106. For example, a connector seat 127 can be used. In another example, one side of the first interface 110 can be an existing wiring harness connector used to connect with a prior art LOD 104 in the form of a Geiger Mueller sensor 104. When a retrofit is desired to replace the prior art LOD 104, the LOD instrumentation translator 106 can then be connected to the wiring harness connector at the first interface and a new LOD 104, such as a Silicon Carbide (SiC) type LOD 104, can then be connected via the second interface. In still other embodiments, the engine controller 100 may be integrated with the LOD instrumentation translator 106 such that the first interface is internal to a hardware enclosure of the engine controller 100. In this embodiment, the first interface can include any combination of lead lines, copper traces, and shared memory, and data bus communication necessary to convey the excitation signal 112 and afterburner condition data 108.

The hardware enclosure 119 can include any type of housing sufficient to support components of the LOD instrumentation translator 106. In some forms, the hardware enclosure 119 is a hermetically sealed housing, but not all embodiments need to include hermetic sealing.

The LOD instrumentation translator 106 includes a power converter 114 structured to convert the excitation signal 112 into an LOD power 118 used either directly with the LOD 104, or, as in the illustrated embodiment of FIG. 3, used as a device excitation 121 to an LOD sensing device 116. In either of these forms, the LOD power 118 is useful to enable sampling of light-off data 115 from the LOD 104, where the light-off data 115 is indicative of an afterburning condition of the gas turbine engine (e.g., indicative of the presence of a flame and/or indicative of the intensity of the flame). In the illustrated embodiment, the LOD sensing device 116 can take the form of a transimpedance amplifier useful, in conjunction with the power converter 114, to detect and, in some forms, amplify a signal from the LOD 104. In some embodiments, the LOD sensing device 116 may take the form of the LOD 104 (e.g., embodiments of a reconfigurable LOD instrumentation translator 106 which can operate with several different LODs 104, some of which may require an onboard LOD sensing device 116, and others in which the LOD sensing device is the LOD 104).

In the embodiment depicted in FIG. 3, the LOD 104 is in the form of a SiC photodiode LOD capable of generating an output signal between 50 nanoAmps (nA) and 100nA. The LOD sensing device 116 in the illustrated embodiment amplifies the current signal from the LOD 104 (e.g., the light-off data 115 provided from operation of the LOD 104) and converts it to a voltage output. Other types of LOD sensing devices 116 may be used to detect and/or change (e.g., amplify, convert, etc.) the light-off data 115 from the LOD 104. In the illustrated embodiment, the current output of the LOD sensing device 116 is scaled between 0V and 5V as a direct current (DC) voltage when presented with the output signal of the SiC photodiode LOD of the embodiment. Other scalings and/or conversions (e.g., analog to analog, analog to digital, voltage to current, etc.) are contemplated. The LOD sensing device 116 is configured to provide an output signal 117 to a signal converter 120 which is configured to receive the output signal 117 (or in another embodiment such as, but not limited to, a reconfigurable LOD instrumentation translator 106, receive the light-off data 115) and transduce it for passage to the engine controller 100 as afterburner condition data 108. As illustrated in FIG. 3, the signal converter 120 is configured to receive power from the power converter 114.

In the illustrated embodiment, the signal converter 120 includes a voltage to frequency converter 122 for converting the output signal 117 from DC to alternating current (AC), and a voltage driver 124 structured to receive the converted output signal 126 and output the afterburner condition data 108. The voltage to frequency converter 122 can be constructed to output the converted output signal 126 if the output signal 117 is of large enough magnitude. Below a threshold magnitude of the output signal 117, the voltage to frequency converter 122 may not output the converted output signal 126 (e.g., it may output a zero or null value for the converted output signal 126 if the output signal 117 is below a threshold). Such a threshold above which the voltage to frequency converter 122 will output the converted output signal 126 can be referred to as a threshold voltage to frequency output. In some embodiments, the threshold may be determined based on an amplification of the circuit for given LOD 104 (e.g., a new SiC LOD 104). In one non-limiting example, the threshold can be between 2.3V and 14.6V, in which case the system will produce 1500 cps indicating that flame is ON. In other embodiments, the threshold voltage may produce 600 cps which can be used to determine as flame on. In the illustrated embodiment of FIG. 3, the voltage driver 124 is configured to transform the converted output signal 126 which is an AC signal to the afterburner condition data 108 in the form of rectangular pulses having a pulse amplitude and a frequency. As in the embodiment depicted in FIG. 2, the engine controller 100 is configured to receive the afterburner condition data 108 generated from the voltage driver 124 of the signal converter 120 and interpret a status of the afterburner in light of the afterburner condition data 108. In one embodiment, afterburner condition data 108 having low pulse counts measured over a measuring window (e.g., a one second window) represents an afterburner condition that is in an OFF condition without a flame; high pulse counts measured over the measuring window represent an afterburner condition that is an ON condition having a flame. In some forms, a threshold pulse count over a measurement window represents a demarcation between the ON condition and the OFF condition (in one embodiment, the system can determine the ON condition if pules are greater than 100 cps; while another embodiment the system may determine that the system is ON at 600 cps). In some forms, a flame intensity can be measured by the relative number of pulse counts. For example, a high pulse count (e.g., a number of pulses over the measurement window) such as 2200 cps represents a maximum flame intensity (e.g., a high fuel flow rate) while a low pulse count (e.g., a number of pulses over the measurement window) such as 600 cps represents a minimum flame intensity. It will be appreciated that the high fuel flow rate will be greater than a low fuel flow rate. Thus, as will be appreciated, the engine controller 100 can be configured to determine a binary condition of the afterburner assembly 80 in some embodiments, but can alternatively be used to determine a relative condition of the afterburner assembly 80 in other embodiments. In some forms, the engine controller 100 may produce both a binary operating data of engine condition based on a number of pulses satisfying a threshold value determined over a measurement window (e.g., a binary operating data indicating either ON or OFF, where a threshold value can be, for example, a number pulses counted over a one second measurement window such as 600 cps to demarcate between the ON and OFF condition in one embodiment, but can be 100 cps in another embodiment, while another embodiment may implement a demarcation at 17 cps), while also producing an intensity operating data of engine condition based on a relative value of pulses measured over a measurement window of the afterburner condition data 108. A determination of either or both of the binary operating data and the intensity operating data can be provided by the engine controller 100 to any other subsystem that requires it, such as, but not limited to, a flight control system in which the propulsion system is used. The engine controller 100 can communicate provide the binary operating data and the intensity operating data over a data bus or any other suitable communication channel.

As will be apparent from FIGS. 2 and 3, the engine controller 100 can be configured to supply an excitation signal 112 for purposes of providing power to enable a return communication of the afterburner condition data 108. LODs 104 that can operably receive the excitation signal 112 and provide afterburner condition data 108 in a proper format expected from the engine controller 100 (dubbed a 'proper LOD' for ease of discussion) need not include an intermediate LOD instrumentation translator 106. LODs 104 that are not proper (e.g., cannot operably receive the excitation signal 112 and provide afterburner condition data 108 in a proper format expected from the engine controller 100) need to include an intermediate LOD instrumentation translator 106. Importantly, LODs 104 that are proper may still be able to use an embodiment of the LOD instrumentation translator 106 which accounts for use of proper and not proper LODs 104. The assessment of whether an LOD 104 is proper, therefore, is dependent upon the configuration of the engine controller 100 taking into consideration (1) the excitation signal 112 sent from and generated by the engine controller 100; and (2) the expectation of the engine controller to receive the afterburner condition data 108 having a specific signal format so that proper evaluation of the afterburner condition data 108 can be performed. In some embodiments, an arbitrary LOD 104 may be operable with the excitation signal 112 produced by the engine controller 100, but otherwise not provide a proper return afterburner condition data 108, or vice versa. In such situations, embodiments of the LOD instrumentation translator 106 can account for these variations, either in a fixed sense or a reconfigurable sense.

Whether the operation of the LOD instrumentation translator 106 is fixed or reconfigurable, the components the constitute the LOD instrumentation translator 106 can collectively be referred to as a translator controller 130. Another embodiment of a reconfigurable translator controller 130 is described below.

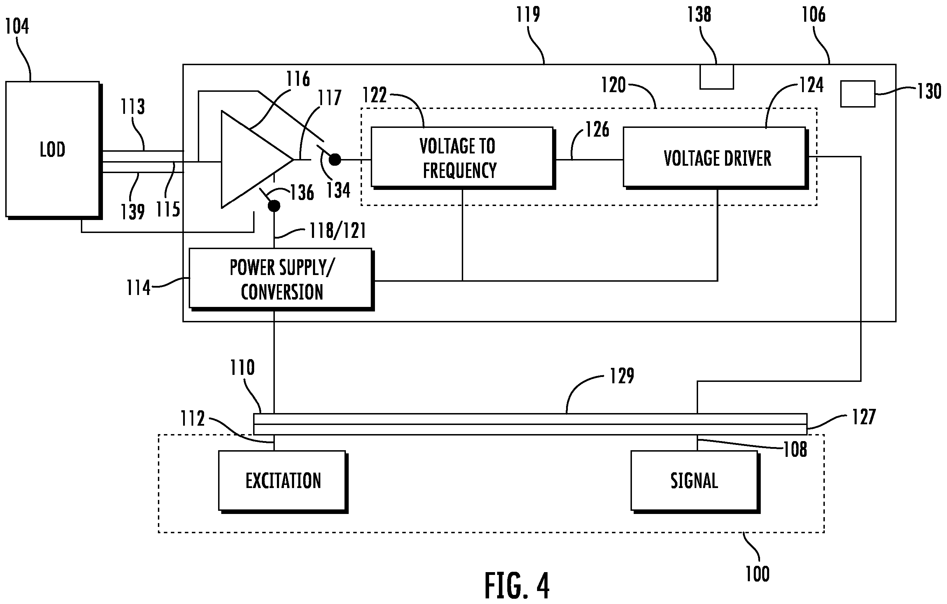

Turning now to FIG. 4, one embodiment of a reconfigurable LOD instrumentation translator 106 having an embodiment of the translator controller 130 is provided, where like reference numerals refer to like elements. The translator controller 130 includes a control supervisor 132 useful to reconfigure the operation of the LOD instrumentation translator 106, and specifically switches 134 and 136. In the illustrated embodiment, the LOD instrumentation translator 106 may be in communication with one or more switch settings 138 that can be configured by a user to designate the desired configuration of the switches 134 and 136. Such a switch setting 138 can take a variety of forms, such as, but not limited to, one or more dip switches. When activated, the switch setting(s) 138 can dictate the configuration of switches 134 and 136. For example, a first dip switch can include a first position for switch 134 that bypasses the LOD sensing device 116, and a second position that connects the LOD sensing device 116 to the voltage to frequency converter 122. A second dip switch can include a first position for switch 136 that bypasses the LOD sensing device 116, and a second position that connects the LOD sensing device 116 to the power converter 114.

The switch setting 138 can also be resident in software instructions executed by a processor of a computing device and/or memory associated with a computing device associated with the translator controller 130. It will be appreciated that the switch settings 138 can be changed and/or loaded into the LOD instrumentation translator 106 such as through a programmable translator controller 130. When the switch settings are physical switches (e.g., dip switches), the switch setting 138 can take on any variety of forms useful to receive user input. In one non-limiting form, the switch setting 138 can include a binary position dip switch, the first position of which controls the switches 134 and 136, via the translator controller 130, to close to connect LOD power 118 to the LOD sensing device 116 and connect the signal converter 120 to the LOD sensing device 116. In the second position of the binary position of the switch setting 138, switches 134 and 136 can be reconfigured to provide LOD power 118 directly to the LOD 104, while the signal converter 120 is connected directly to the LOD 104, bypassing the LOD sensing device 116. The switch setting 138 can also be used to set the threshold voltage to frequency output discussed above, among many other reconfigurable settings of the LOD instrumentation translator 106.

In other alternative and/or additional embodiments, the translator controller 130 can be configured to automatically detect the type of LOD 104 connected to the LOD instrumentation translator 106 via the second interface 113. For example, the translator controller 130 may include the ability to sense a specific configuration of a plurality of lead lines at the first interface and, based on the determination of the specific configuration, set the switches 134 and 136 accordingly. The logic to determine the specific configuration at the second interface 113 may reside in the control supervisor 132.

Also depicted in FIG. 4, the LOD 104 is wired directly with the LOD instrumentation translator 106 such that a rigid connection 139 is provided (e.g., the LOD 104 is affixed directly to the hardware enclosure 119 for the LOD instrumentation translator 106. The first interface 110 in FIG. 4 includes a connector having a connector seat 127 structured to receive a connector 129 of a wiring harness. Excitation can be provided to the LOD 104 via the LOD instrumentation translator 106 through the wiring harness from the engine controller 100 which can be connected to the LOD instrumentation translator 106 at the first interface 100. Afterburner condition data 108 can be determined by the LOD instrumentation translator 106 as described above using as input the light-off data 115 from the LOD 104. The afterburner condition data can be relayed via the first interface 110 and wiring harness back to the engine controller 100. The first interface 110 can be configured to permit retrofit possibilities for the LOD 104. For example, if it is desired to change the LOD 104 from a Geiger Mueller type of LOD 104, the LOD instrumentation translator 106 can be integrated with the gas turbine engine 10 along with a new LOD 104 which replaces the Geiger Mueller type of LOD 104. The LOD instrumentation translator 106 can interface with the wiring harness from the engine controller 100 in lieu of the wiring harness interfacing directly with the formerly installed Geiger Mueller LOD 104. The replacement LOD 104 can be connected to the LOD instrumentation translator 106 as described above such that the engine controller 100 does not need to be modified. In this regard, the engine controller 100 can continue to provide the same excitation signal 112, regardless of the type of LOD 104, and can continue to receive the same afterburner condition data 108. The LOD instrumentation translator 106 can perform the translation needed between a different LOD 104 and the engine controller 100. During a retrofit operation, the instrumentation translator 106 can, but need not, be located adjacent to the LOD 104 to receive existing wiring used for the Geiger Mueller LOD 104 that is being replaced. Thus, minimal changes may be incurred to retrofit from an old Geiger Mueller LOD 104 to a different type of LOD 104 (e.g., an SiC type of LOD). In other embodiments, additional wiring may be provided so that the LOD instrumentation translator 106 need not be adjacent to the LOD 104. Other than the additional wiring a mounting location for the LOD instrumentation translator 106, no other visible changes may be detected as a result of some retrofits.

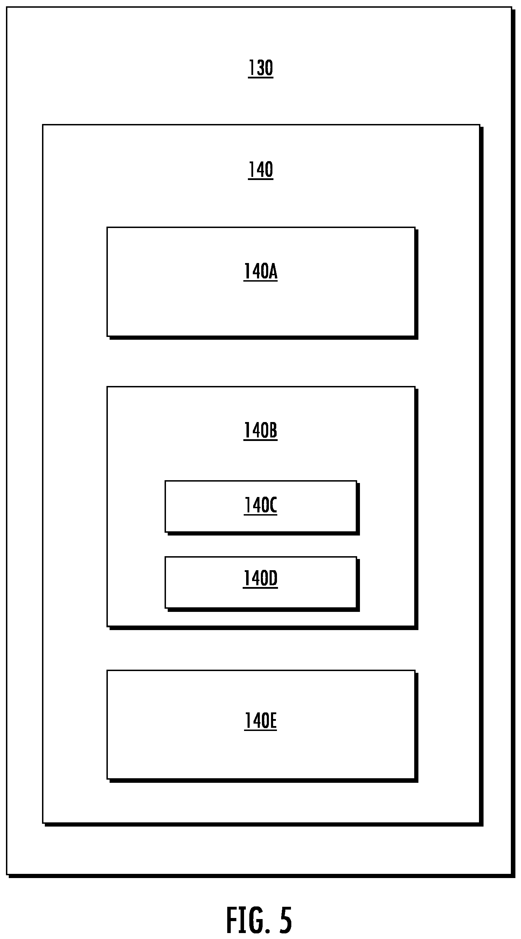

Turning now to FIG. 5, one or more portions of the LOD instrumentation translator 106, including, but not limited to, the translator controller 130, can be implemented using a computing device 140, one embodiment of which is illustrated in FIG. 9. The computing device(s) 140 can include one or more processor(s) 140A and one or more memory device(s) 140B. The one or more processor(s) 140A can include any suitable processing device, such as a microprocessor, microcontroller, integrated circuit, logic device, and/or other suitable processing device. The one or more memory device(s) 140B can include one or more computer-readable media, including, but not limited to, non-transitory computer-readable media, RAM, ROM, hard drives, flash drives, and/or other memory devices.

The one or more memory device(s) 140B can store information accessible by the one or more processor(s) 140A, including computer-readable instructions 140C that can be executed by the one or more processor(s) 140A. The instructions 140C can be any set of instructions that when executed by the one or more processor(s) 140A, cause the one or more processor(s) 140A to perform operations. In some embodiments, the instructions 140C can be executed by the one or more processor(s) 140A to cause the one or more processor(s) 140A to perform operations, such as any of the operations and functions for which the controller and/or the computing device(s) 140 are configured, the operations for any of the aforementioned systems as described herein, and/or any other operations or functions of the one or more computing device(s) 140 (e.g., as a full authority digital engine controller). The instructions 140C can be software written in any suitable programming language or can be implemented in hardware. Additionally, and/or alternatively, the instructions 140C can be executed in logically and/or virtually separate threads on the one or more processor(s) 140A. The one or more memory device(s) 140B can further store data 140D that can be accessed by the one or more processor(s) 140A. For example, the data 140D can include data indicative of outside air conditions, power flows, data indicative of engine/ aircraft operating conditions, and/or any other data and/or information described herein.

The computing device(s) 140 can also include a network interface 140E used to communicate, for example, with the other components of the systems described herein (e.g., via a communication network). The network interface 140E can include any suitable components for interfacing with one or more network(s), including for example, transmitters, receivers, ports, controllers, antennas, and/or other suitable components. One or more devices can be configured to receive one or more commands from the computing device(s) 140 or provide one or more commands to the computing device(s) 140.

The network interface 140E can include any suitable components for interfacing with one or more network(s), including for example, transmitters, receivers, ports, controllers, antennas, and/or other suitable components.

The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

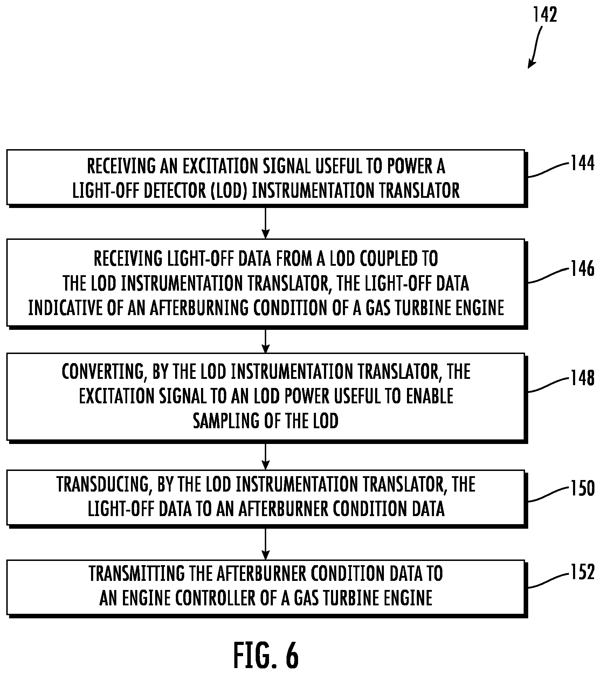

FIG. 6 discloses a method 142 for providing the excitation signal 112 to collect light-off data 115 and providing an afterburner condition data 108 to an engine controller 100. The method 142, at step 144, includes receiving the excitation signal 112 useful to power a light-off detector (LOD) instrumentation translator 106. For example, the excitation signal 112 can be received from the engine controller 100 through a wiring harness, among other possible wiring components. The excitation signal 112 can be generated by the engine controller 100, or can be generated by another device and passed to the LOD instrumentation translator 106 via the engine controller 100. At step 146, the method 142 includes receiving light-off data 115 from a LOD 104 coupled to the LOD instrumentation translator 106, the light-off data 115 indicative of an afterburning condition of a gas turbine engine 10. For example, the light-off data 115 can, in one embodiment, be provided to the LOD instrumentation translator 106 as a direct result of the LOD instrumentation translator 106 providing the excitation signal 112 to the LOD 104. Thus, at step 148, the method 142 includes converting, by the LOD instrumentation translator 106, the excitation signal 112 to an LOD power 118 useful to enable sampling of the LOD 104. At step 150, the method 142 includes transducing, by the LOD instrumentation translator 106, the light-off data 115 to an afterburner condition data 108. For example, the LOD instrumentation translator 106 is configured to transduce the light-off data 115 to the afterburner condition data 108 using one or more components such as, but not limited to, the components depicted in FIG. 4 and described elsewhere herein. At step 152, the method 142 includes transmitting the afterburner condition data 108 to an engine controller 100 of a gas turbine engine 10.

In some embodiments, the method 142 may also include converting the excitation signal 112 to the device excitation 121 to an LOD sensing device 116. In still other embodiments, the method 142 may also include powering the voltage to frequency converter 122 and powering the voltage driver 124, the voltage driver 124 structured to provide the afterburner condition data 108.

A technical benefit of the LOD instrumentation translator 106 is the ability to use different LODs in any given instance of a gas turbine engine 10. For example, a gas turbine engine 10 that has been fielded may be upgraded with an alternative LOD that operates different than an original LOD, but that is nevertheless operable with the engine controller 100 by virtue of the LOD instrumentation translator 106. The LOD instrumentation translator 106 can accommodate a wide variety of LODs 104 and be configured to detect the type of LOD, or have the ability to be programmed by a user (e.g., through the use of dip switches) to accommodate a different LOD 104.

## Claims

1. A light-off detector instrumentation translator comprising:
a hardware enclosure (119) ;
a first interface (110) structured to receive an excitation signal (112) and to deliver the afterburner condition data (108) to the engine controller (100);
a second interface (113) structured to receive the light-off data (115) from the LOD (104); and
a translator controller (130) configured to:
convert the excitation signal (112) to an LOD power (118);
transduce the light-off data(115) to the afterburner condition data (108) using a signal converter (120); and
provide power to the signal converter (120).

2. The light-off detector instrumentation translator of claim 1, which further includes a power converter (114), wherein the power converter (114) is structured to provide power to the signal converter (120) and provide power to an LOD sensing device (116).

3. The light-off detector instrumentation translator of claim 1 or 2,
wherein the signal converter (120) includes a voltage to frequency converter (122) structured to receive a direct current (DC) voltage generated by the LOD (104) and to convert the DC voltage to an alternating current (AC) voltage.

4. The light-off detector instrumentation translator of claim 3, wherein the signal converter (120) includes a voltage driver (124) structured to receive the AC voltage from the voltage to frequency converter (122) and to convert the AC voltage to a voltage having a rectangular waveform.

5. The light-off detector instrumentation translator of claim 4, wherein the signal converter (120) is in switchable communication between an LOD sensing device (116) and the LOD.

6. The light-off detector instrumentation translator of any preceding claim, which further includes the LOD (104).

7. The light-off detector instrumentation translator of any preceding claim, wherein the translator controller (130) is a programmable controller and further includes a switch configured to include a plurality of switch settings (138) corresponding to at least one of a respective plurality of sensor types of the LOD and a threshold voltage to frequency output.

8. The light-off detector instrumentation translator of claim 7, wherein the sensor types includes a plurality of LODs (104) configured as UV photonic detectors and each structured to detect different UV radiation wavelengths between 100 nanometers (nm) and 400nm.

9. The light-off detector instrumentation translator of claim 8, wherein the switch is at least one of a hardware switch and a software switch.

10. The light-off detector instrumentation translator of any preceding claim, which further includes an engine controller (100) configured to modulate a fuel flow to the gas turbine engine (10).

11. The light-off detector instrumentation translator of claim 10, wherein the LOD instrumentation translator (106) is coupled with the engine controller (100) via a first interface (110) structured to receive an excitation signal (112) from the engine controller (100) and to deliver afterburner condition data (108) to the engine controller (100).

12. The light-off detector instrumentation translator of any preceding claim, wherein the translator controller (130) is a programmable controller.

## Patentansprüche

1. Eine Instrumentierungs-Übersetzungseinrichtung für einen Light-off-Detektor, umfassend:
ein Hardwaregehäuse (119);
eine erste Schnittstelle (110), die dazu ausgelegt ist, ein Anregungssignal (112) zu empfangen und die Nachbrennerzustandsdaten (108) an die Motorsteuerung (100) zu übermitteln;
eine zweite Schnittstelle (113), die dazu ausgelegt ist, die Light-off-Daten (115) von dem LOD (104) zu empfangen; und
eine Übersetzungssteuerung (130), die dazu konfiguriert ist:
das Anregungssignal (112) in eine LOD-Leistung (118) umzuwandeln;
die Light-off-Daten (115) unter Verwendung eines Signalwandlers (120) in die Nachbrennerzustandsdaten (108) umzusetzen; und
dem Signalwandler (120) Leistung bereitzustellen.

2. Instrumentierungs-Übersetzungseinrichtung für einen Light-off-Detektor nach Anspruch 1, die ferner einen Leistungswandler (114) enthält, wobei der Leistungswandler (114) dazu ausgelegt ist, dem Signalwandler (120) Leistung bereitzustellen und einer LOD-Erfassungsvorrichtung (116) Leistung bereitzustellen.

3. Instrumentierungs-Übersetzungseinrichtung für einen Light-off-Detektor nach Anspruch 1 oder 2, wobei der Signalwandler (120) einen Spannungs-Frequenz-Wandler (122) enthält, der dazu ausgelegt ist, eine von dem LOD (104) erzeugte Gleichspannung (DC-Spannung) zu empfangen und die Gleichspannung in eine Wechselspannung (AC-Spannung) umzuwandeln.

4. Instrumentierungs-Übersetzungseinrichtung für einen Light-off-Detektor nach Anspruch 3, wobei der Signalwandler (120) einen Spannungstreiber (124) enthält, der dazu ausgelegt ist, die Wechselspannung von dem Spannungs-Frequenz-Wandler (122) zu empfangen und die Wechselspannung in eine Spannung mit einer rechteckigen Wellenform umzuwandeln.

5. Instrumentierungs-Übersetzungseinrichtung für einen Light-off-Detektor nach Anspruch 4, wobei der Signalwandler (120) in einer schaltbaren Kommunikationsverbindung zwischen einer LOD-Erfassungsvorrichtung (116) und dem LOD steht.

6. Instrumentierungs-Übersetzungseinrichtung für einen Light-off-Detektor nach einem der vorhergehenden Ansprüche, die ferner den LOD (104) enthält.

7. Instrumentierungs-Übersetzungseinrichtung für einen Light-off-Detektor nach einem der vorhergehenden Ansprüche, wobei die Übersetzungssteuerung (130) eine programmierbare Steuerung ist und ferner einen Schalter enthält, der dazu konfiguriert ist, eine Vielzahl von Schaltereinstellungen (138) zu enthalten, die mindestens einem von einer jeweiligen Vielzahl von Sensortypen des LOD und einem Schwellenwert für eine Spannungs-Frequenz-Ausgabe entsprechen.

8. Instrumentierungs-Übersetzungseinrichtung für einen Light-off-Detektor nach Anspruch 7, wobei die Sensortypen eine Vielzahl von LODs (104) enthalten, die als UV-Photonendetektoren konfiguriert und jeweils dazu ausgelegt sind, unterschiedliche UV-Strahlungswellenlängen zwischen 100 Nanometern (nm) und 400 nm zu erfassen.

9. Instrumentierungs-Übersetzungseinrichtung für einen Light-off-Detektor nach Anspruch 8, wobei der Schalter mindestens eines von einem Hardwareschalter und einem Softwareschalter ist.

10. Instrumentierungs-Übersetzungseinrichtung für einen Light-off-Detektor nach einem der vorhergehenden Ansprüche, die ferner eine Motorsteuerung (100) enthält, die dazu konfiguriert ist, einen Kraftstoffstrom zu dem Gasturbinentriebwerk (10) zu modulieren.

11. Instrumentierungs-Übersetzungseinrichtung für einen Light-off-Detektor nach Anspruch 10, wobei die LOD-Instrumentierungs-Übersetzungseinrichtung (106) über eine erste Schnittstelle (110), die dazu ausgelegt ist, ein Anregungssignal (112) von der Motorsteuerung (100) zu empfangen und Nachbrennerzustandsdaten (108) an die Motorsteuerung (100) zu übermitteln, mit der Motorsteuerung (100) gekoppelt ist.

12. Instrumentierungs-Übersetzungseinrichtung für einen Light-off-Detektor nach einem der vorhergehenden Ansprüche, wobei die Übersetzungssteuerung (130) eine programmierbare Steuerung ist.

## Revendications

1. Traducteur d'instrumentation pour détecteur d'extinction de flamme, comprenant :
une enceinte matérielle (119) ;
une première interface (110) structurée pour recevoir un signal d'excitation (112) et pour distribuer les données (108) d'état de postcombustion au dispositif (100) de commande de moteur ;
une seconde interface (113) structurée pour recevoir les données (115) d'extinction de flamme provenant du LOD (« Light-Off Detector » pour détecteur d'extinction de flamme) (104) ; et
un dispositif (130) de commande de traducteur configuré pour :
convertir le signal d'excitation (112) en une puissance de LOD (118) ;
transduire les données (115) d'extinction de flamme en les données (108) d'état de postcombustion à l'aide d'un convertisseur de signal (120) ; et
alimenter en énergie le convertisseur de signal (120).

2. Traducteur d'instrumentation de détecteur d'extinction de flamme selon la revendication 1, qui comprend en outre un convertisseur de puissance (114), dans lequel le convertisseur de puissance (114) est structuré pour alimenter en énergie le convertisseur de signal (120) et alimenter en énergie un dispositif (116) de détection de LOD.

3. Traducteur d'instrumentation de détecteur d'extinction de flamme selon la revendication 1 ou 2, dans lequel le convertisseur de signal (120) comprend un convertisseur tension-fréquence (122) structuré pour recevoir une tension continue (CC) générée par le LOD (104) et pour convertir la tension CC en une tension alternative (CA).

4. Traducteur d'instrumentation de détecteur d'extinction de flamme selon la revendication 3, dans lequel le convertisseur de signal (120) comprend un circuit (124) d'attaque de tension structuré pour recevoir la tension alternative (CA) depuis le convertisseur tension-fréquence (122) et pour convertir la tension CA en une tension présentant une forme d'onde rectangulaire.

5. Traducteur d'instrumentation de détecteur d'extinction de flamme selon la revendication 4, dans lequel le convertisseur de signal (120) est en communication commutable entre un dispositif (116) de détection de LOD et le LOD.

6. Traducteur d'instrumentation de détecteur d'extinction de flamme selon une quelconque revendication précédente, qui comprend en outre le LOD (104).

7. Traducteur d'instrumentation de détecteur d'extinction de flamme selon une quelconque revendication précédente, dans lequel le dispositif (130) de commande de traducteur est un dispositif de commande programmable et comprend en outre un commutateur configuré pour inclure une pluralité de réglages de commutation (138) correspondant à au moins l'un d'une pluralité respective de types de capteur du LOD et à une sortie de tension-fréquence de seuil.

8. Traducteur d'instrumentation de détecteur d'extinction de flamme selon la revendication 7, dans lequel les types de capteur comprennent une pluralité de LOD (104) configurés en tant que détecteurs photoniques UV et chacun étant structuré pour détecter différentes longueurs d'onde de rayonnement UV comprises entre 100 nanomètres (nm) et 400 nm.

9. Traducteur d'instrumentation de détecteur d'extinction de flamme selon la revendication 8, dans lequel le commutateur est au moins l'un parmi un commutateur matériel et un commutateur logiciel.

10. Traducteur d'instrumentation de détecteur d'extinction de flamme selon une quelconque revendication précédente, qui comprend en outre un dispositif (100) de commande de moteur configuré pour moduler un débit de carburant vers le moteur (10) à turbine à gaz.

11. Traducteur d'instrumentation de détecteur d'extinction de flamme selon la revendication 10, le traducteur (106) d'instrumentation de LOD étant couplé au dispositif (100) de commande de moteur via une première interface (110) structurée pour recevoir un signal d'excitation (112) provenant du dispositif (100) de commande de moteur et pour distribuer des données (108) d'état de postcombustion au dispositif (100) de commande de moteur.

12. Traducteur d'instrumentation de détecteur d'extinction de flamme selon une quelconque revendication précédente, dans lequel le dispositif (130) de commande de traducteur est un dispositif de commande programmable.
